# EUROPÄISCHE PATENTSCHRIFT

(11) **EP 0 555 650 B1**
(45) Veröffentlichungstag und Bekanntmachung des Hinweises auf die Patenterteilung: **21.06.1995**
(21) Anmeldenummer: 93100504.5
(22) Anmeldetag: 15.01.1993
(51) Int. Cl.: F16L 41/02, F16L 33/207, F16L 13/14

(54) **Adaptierbare Anschlussvorrichtung für Rohre**
Adaptive device for pipe couplings
Dispositif adaptatif pour raccords de tuyaux

(30) Priorität: 14.02.1992 DE 4204430
(43) Veröffentlichungstag der Anmeldung: 18.08.1993
(73) Patentinhaber: Hewing GmbH, D-48607 Ochtrup (DE)
(72) Erfinder: Homm, Karl-Georg, W-4370 Marl-Polsum (DE)
(74) Vertreter: Hilleringmann, Jochen, Dipl.-Ing.

(56) Entgegenhaltungen:
- DE-A- 3 416 702
- DE-U- 9 113 050
- FR-A- 641 795
- FR-A- 1 549 540
- GB-A- 2 192 247
- US-A- 3 119 411

## Beschreibung

Die Erfindung betrifft eine adaptierbare Anschlußvorrichtung für Rohre, insbesondere eine Rohrverbindungsvorrichtung für vorzugsweise Kunststoff-Metall-Verbundrohre, mit einem Anschlußkörper, mit dem das Rohr (indirekt) zu koppeln ist, und mindestens einem mit dem Anschlußkörper verbindbaren Adapter-Zwischenstück, mit dem das Rohr verbindbar ist.

Bei wasserführenden Rohren im Sanitär- und Heizungsbereich, insbesondere bei Fußbodenheizungen handelt es sich um Mehrschicht-Verbundrohre mit zwei Kunststoffschichten aus vorzugsweise vernetztem Polyethylen und einer dazwischen angeordneten Metallschicht als Diffusionssperre aus z.B. Aluminium. Diese Rohre weisen einerseits die Eigenschaften (Biegsamkeit) eines Kunststoffrohres und andererseits, was die Diffusionssperre angeht, die Eigenschaften eines Metallrohres auf.

Anschlußvorrichtungen für insbesondere Rohre der oben genannten Art weisen einen Anschlußkörper aus Metall auf, an den das Rohr (indirekt) anzuschließen ist. Bei diesem Anschlußkörper handelt es sich z.B. um ein Winkel-, ein geradliniges Verbindungsstück oder ein T-Stück zum Verbinden zweier oder mehrerer Rohre. Das Anschlußstück weist eine der Anzahl der anschließbaren Rohre entsprechende Anzahl von Innen- oder Ausgewinden auf, über die der Anschlußkörper mit Adapter-Zwischenstücken verschraubbar ist. An den Adapter-Zwischenstücken werden die anzuschließenden Rohrenden direkt festgelegt, was z.B. durch Aufschieben und Aufpressen des Rohrendes auf das Adapter-Zwischenstück erfolgen kann. Um die Anschlußvorrichtung an unterschiedliche Durchmesser der anzuschließenden Rohre adaptieren zu können, weisen die Zwischenstücke bei gleichen Außengewinden unterschiedliche Außendurchmesser in ihren Abschnitten zum Aufschieben der Rohrenden auf. Eine derartige adaptierbare Anschlußvorrichtung kann also zum Verbinden von Rohren verschiedener oder unterschiedlicher Durchmesser zusammengestellt werden. Damit reduzieren sich die Anzahl zu bevorratender Teile und somit die Lagerhaltungs- und Rohrverbindungs-Herstellungskosten. Der Monteur vor Ort kann sich aus dem Vorrat an Anschlußkörpern und Zwischenstücken den gerade benötigten Rohrverbinder zusammenstellen. Ein gewisser Nachteil besteht in der Art der Zusammenfügung von Anschlußkörper und Zwischenstück durch Verschrauben, was vergleichsweise aufwendig und damit arbeitsintensiv ist.

Aus EP 0 403 037 A1 ist ein verpreßbarer Fitting bekannt, der aus einem Anschlußkörper, z.B. einem T-Stück, und einem oder mehreren Zwischenstücken besteht, das in den Anschlußkörper einsteckbar ist. Zwischenstück und Anschlußkörper werden durch Löten, Schweißen oder durch Verkleben miteinander verbunden. Das anzuschließende Rohr wird in das Zwischenstück eingeschoben. Durch Verformung des Zwischenstücks erfolgt die mechanische Verbindung zwischen Zwischenstück und Rohr.

Eine Anschlußvorrichtung mit einem Anschlußkörper und einem in einen Einsteckraum desselben einsteckbaren Rohrende ist aus GB-A-2 192 247 bekannt. Bei dieser Anschlußvorrichtung wird die anzuschließende Rohrleitung in einen zylindrischen Aufnahmeraum des Anschlußkörpers eingesteckt. Dabei befindet sich das in den Aufnahmeraum einzuführende Ende der Rohrleitung zwischen einer Innenhülse und einer Außenhülse. Die Außenhülse weist eine Umfangsvertiefung auf, in die der Anschlußkörper eindrückbar ist. Die gesamte Anordnung aus Rohrleitungsende, Innen- und Außenhülse wird in den Einsteckraum eingeführt und mit dem Anschlußkörper verbunden. Bei dieser bekannten Vorrichtung handelt es sich also um eine zumindest dreiteilige Anschlußvorrichtung (Anschlußkörper, Innen- und Außenhülse). Das anzuschließende Rohr befindet sich im angeschlossenen Zustand mit seinem Ende innerhalb des Anschlußkörpers.

Eine weitere Anschlußvorrichtung mit einem Zwischenstück, auf das ein anzuschließender Schlauch aufschiebbar ist, ist aus US-A-3 119 411 bekannt. Das Zwischenstück weist eine Verdickung auf, um die herum der Anschlußkörper der Anschlußvorrichtung greift und das Zwischenstück damit hält.

Der Erfindung liegt die Aufgabe zugrunde, eine Anschlußvorrichtung für insbesondere Mehrschicht-Verbundrohre zu schaffen, deren Montage wesentlich vereinfacht ist.

Zur Lösung dieser Aufgabe wird mit der Erfindung eine an unterschiedliche Rohrdurchmesser adaptierbare Anschlußvorrichtung der eingangs genannten Art vorgeschlagen, die durch die Merkmale des Anspruchs 1 gekennzeichnet ist.

Bei der erfindungsgemäßen Anschlußvorrichtung werden der Anschlußkörper und das Adapter-Zwischenstück miteinander verpreßt. Das Zwischenstück selbst weist einen Stützabschnitt auf, auf den das anzuschließende Rohrende aufsteckbar ist, wobei das aufgesteckte Rohrende durch einen dieses umgebenden Preßkörper auf den Stützabschnitt aufpreßbar ist. Beide Teile bzw. zumindest das Anschlußstück bestehen aus einem plastisch verformbaren und seine Form im verformten Zustand beibehaltenden Material, wie z.B. Metall. Der Anschlußkörper weist einen Einsteckraum auf, der vorzugsweise koaxial zu dessen Durchführung angeordnet ist und mit einer Einstecköffnung am (stirnseitigen) Ende versehen ist. Über die Einstecköffnung ist das mit einem Einsteckende versehene Zwischenstück in den Anschlußkörper einsteckbar, wobei das Einsteckende von dem Anschlußkörper umgeben bzw. umschlossen ist. Das Einsteckende ist mit einer Umfangsvertiefung versehen, in die das Material des Anschlußkörpers durch radiale Einschnürung desselben in den die Umfangsvertiefung umgebenden Abschnitt mittels eines Preßwerkzeugs hineinpreßbar ist. Dabei wird der Anschlußkörper nicht beschädigt, etwa dergestalt, daß seine Wandung reißt oder andere Undichtigkeiten aufweist. Nach der Verpressung weist der Anschlußkörper demzufolge einen umlaufenden Innenvorsprung auf, der in die (Außen-)Umfangsvertiefung im Einsteckende des Zwischenstücks eingreift und mit dem Zwischenstück verkrallt ist. Damit sind axiale Verschiebungen der beiden miteinander verbundenen Teile ausgeschlossen.

In vorteilhafter Weiterbildung der Erfindung ist die Umfangsvertiefung mit einer Schrägfläche an ihrer zur Stirnfläche des Einsteckendes des Zwischenstücks näher gelegenen Flanke versehen. Diese Schrägfläche geht von dem Boden der Umfangsvertiefung aus und in die Außenfläche des Einsteckendes über, die bei eingestecktem Zwischenstück in den Anschlußkörper eingetaucht ist. Beim radialen Verformen des Anschlußkörpers durch Verpressung werden die Radial-Kräfte über die Schrägfläche auch in eine auf das Zwischenstück wirkende Kraft umgesetzt, die in Richtung auf den Einsteckraum wirken und das Zwischenstück in den Einsteckraum hinein bewegen, um es gegen eine Umfangsschulter des Einsteckraums anzudrücken. Das Zwischenstück bewegt sich also selbsttätig bis zum Anschlag seines Einsteckendes an der Anschlag-Schulter des Anschlußkörpers in dessen Einsteckraum hinein und wird gegen diesen Anschlag mit Kraft gedrückt. Der zuverlässige Sitz des Zwischenstücks in dem Anschlußkörper ist damit gewährleistet.

Die Schrägfläche ist vorzugsweise als gekrümmte Fläche mit vergleichsweise kleinem Krümmungsradius ausgebildet. Diese Art der Schrägflächenausbildung erhöht die Axialkraft-Einleitung auf den Zwischenkörper beim Einschnüren des Anschlußkörpers zwecks Verbindung mit dem Zwischenstück.

Vorteilhafterweise ist das Einsteckende mit einem Dichtungsmaterial, insbesondere einem Dichtungs-O-Ring versehen, der bei eingestecktem Zwischenstück innen an dem Anschlußkörper anliegt.

Vorteilhafterweise umgibt bei eingestecktem Zwischenstück der Einstecköffnungsrand des Anschlußkörpers die Umfangsvertiefung des Zwischenstücks. Durch Umbördelung läßt sich der Einstecköffnungsrand in die Umfangsvertiefung hineindrücken. Vorzugsweise ist der Einstecköffnungsrand bzw. der in die Umfangsvertiefung hineinpreßbare Abschnitt des Anschlußkörpers verdickt, weist also z.B. einen Umfangswulst auf. Zwecks radialer Verpressung des Rohres mit dem Zwischenstück weist dieses einen Stützabschnitt in Form einer Stützhülse auf, die mit mehreren Außenumfangsvertiefungen versehen ist. Die Stützhülse ist einstückig mit dem Einsteckende verbunden; beide bilden das Zwischenstück. Das auf die Stützhülse aufgeschobene Rohrende ist von einer Preßhülse umgeben, die mittels eines Preßwerkzeugs auf das Rohrende aufgepreßt wird. Dabei wird das Rohr in die Umfangsvertiefungen der Stützhülse eingedrückt und kommt mit der Stützhülse in dichte Anlage, in der es aufgrund der bleibend verformten Preßhülse verbleibt.

Vorzugsweise werden beide Verpressungen, nämlich die Verpressung des Anschlußkörpers mit dem Einsteckende des Zwischenstücks und die Verpressung des Rohres mit der Stützhülse des Zwischenstücks in einem gemeinsamen Arbeitsgang mit einem Preßwerkzeug durchgeführt. Das Preßwerkzeug ist dabei mit einem ersten Preßbackensatz für die Verpressung des Rohres und mit einem zweiten Preßbackensatz zum Verpressen des Anschlußkörpers mit dem Zwischenstück versehen. Sämtliche erste und zweite Preßbacken sind auswechselbar in dem Preßwerkzeug gehalten.

Nachfolgend wird anhand der Figuren ein Ausführungsbeispiel der Erfindung näher erläutert. Im einzelnen zeigen:
- Fig. 1: im Halbquerschnitt ein T-Rohrverbindungsstück zum Verbinden zweier Rohre gleichen Durchmessers mit einem dritten Rohr, das einen von den beiden anderen Rohren verschiedenen Durchmesser aufweist, wobei die Teile der Anschlußvorrichtung an einem Anschlußende in Explosionsdarstellung, an dem zweiten Anschlußende in vormontiertem, aber noch nicht verpreßten Zustand und an dem dritten Anschlußende in verpreßtem Zustand gezeigt sind,
- Fig. 2: einen Schnitt entlang der Linie II-II der Fig. 1 nach der Verpressung von Anschlußkörper und Zwischenstück,
- Fig. 3: einen Schnitt entlang der Linie III-III der Fig. 1 nach der Verpressung von Preßhülse, Rohr und Zwischenstück und
- Fig. 4: eine Draufsicht auf das verpreßte Anschlußende bei entlang der Linie IV-IV der Fig. 1 geschnittenem Anschlußende.

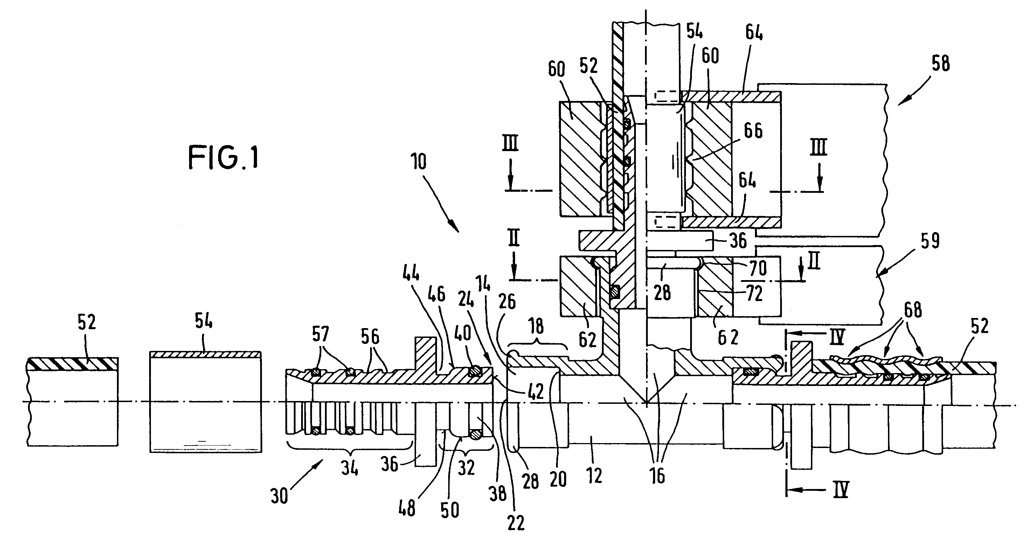

In Fig. 1 ist eine an unterschiedliche Rohrdurchmesser adaptierbare Anschlußvorrichtung in Form eines T-förmigen Rohrverbinders 10 dargestellt. Der Rohrverbinder 10 weist einen zentralen T-förmigen Anschlußkörper 12 aus Metall auf. An seinen drei Enden ist der T-Anschlußkörper 12 mit jeweils einem Einsteckraum 14 versehen. Die Einsteckräume 14 sind koaxial zu den zugehörigen Durchlaßabschnitten 16 ausgebildet und weisen einen größeren Innendurchmesser als diese auf. An dem innenliegenden Ende eines jeden Einsteckraums 14 entsteht daher in dem den Einsteckraum 14 radial umschließenden Endabschnitt 18 des T-förmigen Anschlußkörpers 12 eine radiale Umfangsschulter 20. Jeder Einsteckraum 14 ist über eine Einstecköffnung 22 zugänglich, die an dem stirnseitigen Ende 24 eines jeden Endabschnitts 18 des T-Anschlußkörpers 12 ausgebildet ist. Im Bereich des Einstecköffnungsrandes 26 ist jeder T-Anschlußkörper-Endabschnitt 18 mit einem Außen-Ringwulst 28 versehen.

Jedem Endabschnitt 18 des Anschlußkörpers 12 ist ein Zwischenstück 30 zugeordnet, das ein Einsteckende 32 und einen Stützabschnitt 34 sowie einen diese trennenden Umfangsvorsprung 36 aufweist. Das Einsteckende 32 des Zwischenstücks 30 ist mit einer umlaufenden Ringnut 38 versehen, in der ein Dichtungs-O-Ring 40 angeordnet ist. Die Außendurchmesser sämtlicher Zwischenstück-Einsteckenden 32 sind jeweils gleich den Innendurchmessern der Einsteckräume 14 bzw. geringfügig kleiner als diese. Demgegenüber weisen die Zwischenstücke 30 in ihren Stützabschnitten 34 unterschiedliche Außendurchmesser auf, um im Durchmesser unterschiedliche Rohre anschließen zu können.

Zum Zusammenbauen des Rohrverbinders 10 werden die Zwischenstücke 30 mit ihren Einsteckenden 32 über die Einstecköffnungen 22 in die Einsteckräume 14 des T-Anschlußkörpers 12 eingesteckt. Die ringförmigen Stirnflächen 42 der Einsteckenden 32 liegen dabei an den Umfangsschultern 20 in den Einsteckräumen 14 an. Jedes Zwischenstück-Einsteckende 32 ist mit einer Umfangsvertiefung 44 versehen, die zum Stützabschnitt 34 hin durch eine radiale Flanke des Umfangsvorsprungs 36 und zum stirnseitigen Ende (Stirn-Ringfläche 42) des Einsteckendes 32 hin durch eine gekrümmte Fläche 46 begrenzt ist. Die gekrümmte Fläche 46 beginnt am Boden 48 der Umfangsvertiefung 44 und geht in die Umfangsfläche 50 des Zwischenstück-Einsteckendes 32 über. Bei bis zum Anschlag an der Umfangsschulter 20 in den Einsteckraum 14 eingeführtem Zwischenstück 30 befindet sich die Umfangsvertiefung 44 in Höhe des Einstecköffnungsrandes 26 des zugehörigen Anschlußkörper-Endabschnitts 18 (s. insbesondere das obere Anschlußende des Rohrverbinders 10 gemäß Fig. 1). Durch Verpressen des Einstecköffnungsrandes 26, d.h. durch allseitige Ausübung radialer Kräfte auf den Außenwulst 28 wird der betreffende Endabschnitt 18 des T-Anschlußkörpers 12 verformt, wobei sich der Einstecköffnungsrand 26 unter radialer Einschnürung in die Umfangsvertiefung 44 des zugehörigen Zwischenstücks 30 hineinlegt (s. das rechte Anschlußende des Rohrverbinders 10 gemäß Fig. 1). Bei diesem Preßvorgang kommt die Innenfläche des Einsteckraumes 14 im Bereich der Einstecköffnung 22 in Anlage mit der gekrümmten Schrägfläche 46 des Zwischenstück-Einsteckendes 32. Dadurch werden die radial wirkenden Verpressungskräfte in auf das Zwischenstück 30 wirkende axiale Kräfte umgesetzt. Diese Kräfte drücken das Zwischenstück 30 gegen die Umfangsschulter 20 im Einsteckraum 14, so daß sich das Zwischenstück 30 selbsttätig "festzieht".

Nachdem auf die oben beschriebene Weise sämtliche Zwischenstücke 30 mit dem T-Anschlußkörper 12 verpreßt worden sind, werden die anzuschließenden Rohrenden 52 auf die Stützabschnitte 34 der Zwischenstücke 30 aufgesteckt. Beim Zusammenbau des Rohrverbinders 10 sind zuvor Zwischenstücke 30 verwendet worden, deren Stützabschnitte 34 einen auf die Durchmesser der anzuschließenden Rohrenden 32 abgestimmten Durchmesser aufweisen. Bei dem Rohrverbinder 10 gemäß Fig. 1 weisen beispielsweise das linke und das rechte Zwischenstück einen Stützabschnitt 34 gleichen Außendurchmessers auf, während der Stützabschnitt 34 des oberen Zwischenstücks 30 einen geringeren Außendurchmesser aufweist, da das am oberen Anschlußende anzuschließende Rohr 52 einen kleineren Durchmesser hat als die beiden anderen Rohre 52. Durch entsprechende Wahl der Zwischenstücke läßt sich also ein Rohrverbinder 10 mit an die Rohre angepaßten Anschlußenden zusammenbauen.

Die Befestigung der Rohrenden 52 an den Stützabschnitten 34 der Zwischenstücke 30 erfolgt durch radiale Verpressung. Zu diesem Zweck wird vor dem Aufstecken der Rohrenden 52 auf diese jeweils eine Preßhülse 54 aus Metall aufgeschoben. Bei auf die Stützabschnitte 34 aufgeschobenen Rohrenden 52 werden dann die Preßhülsen 54 derart positioniert, daß die Rohrenden 52 zwischen den Stützabschnitten 34 und den Preßhülsen 54 angeordnet sind. Durch radialer Verpressung der Preßhülsen 54 wird das verformbare Material (beispielsweise vernetztes Polyethylen) der Rohre in Umfangsvertiefungen 56 der Stützabschnitte 34 hineingedrückt, wodurch eine Verzahnung der Stützabschnitte 34 mit den Rohrenden 52 entsteht. Zum Abdichten der Stützabschnitte 34 gegen die Rohrinnenflächen sind an den Stützabschnitten 34 Dichtungs-O-Ringe 57 vorgesehen.

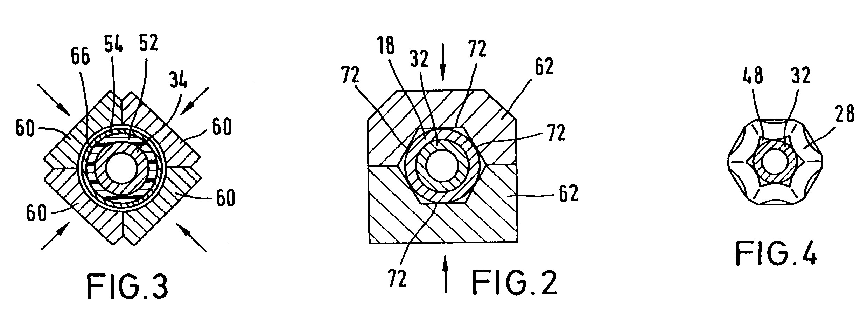

Sowohl die Verpressung des T-Anschlußkörpers 12 mit einem Zwischenstück 30 als auch die Verpressung des anzuschließenden Rohrendes 52 mit dem Zwischenstück 30 erfolgt mit jeweils einem in fig. 1 bei 58 bzw. 59 angedeuteten Preßwerkzeug. Das Preßwerkzeug 58 weist einen ersten Satz Preßbacken 60 zum Verpressen des Rohrendes 52 mit dem Zwischenstück 30 auf. Das Preßwerkzeug 59 ist mit einem Satz Preßbacken 62 zum Verpressen des T-Anschlußkörpers 12 mit dem Zwischenstück 30 versehen. Während, wie in Fig. 3 angedeutet, die Verpressung des Rohrendes 52 eine Vier-Backen-Pressung ist, handelt es sich bei der Verpressung des Anschlußkörpers mit dem Zwischenstück um eine Sechskant-Pressung gemäß Fig. 2. Zwecks exakter axialer Positionierung der Preßhülse 54 beim Preßvorgang ist das Preßwerkzeug 58 mit zwei bei 64 angedeuteten Führungsgabeln versehen, die an den beiden axialen Enden der Preßhülse 54 anliegen und diese zwischen sich einschließen. Eine der Führungsgabeln 64 liegt beim Preßvorgang ferner an dem Umfangsvorsprung 36 an. Die Verpressung der Rohrenden 52 mit den Zwischenstücken 30 erfolgt, wie in Fig. 1 angedeutet, als Rillen-Verpressung. Zu diesem Zweck weisen die Preßbacken 60 Umfangserhebungen 66 auf, die sich von außen in die Preßhülsen 54 beim Preßvorgang eindrücken. Die verpreßte Preßhülse 54 weist also Einschnürungen 68 auf, wie es am rechten Anschlußende der Fig. 1 angedeutet ist.

Die Sechskant-Preßbacken 62 des Preßwerkzeuges 59 sind mit Vertiefungen 70 in ihren ebenen Innenflächenabschnitten 72 versehen, die den Außenwulst 28 des T-Anschlußkörpers 12 beim Verpressen aufnehmen. In diesen Preßbacken-Vertiefungen 70 wird der Einstecköffnungsrand 26 eines Endabschnitts 18 des T-Anschlußkörpers 12 beim Verpressen geführt. Durch diese Maßnahme erhöht sich die Genauigkeit der Verpressung zwischen Anschlußkörper und Zwischenstück. Wie anhand von Fig. 4 zu erkennen ist, weist ein verpreßter Endabschnitt 18 des Anschlußkörpers 12 eine Außen-Sechskant-Umfangsfläche auf, während der Einstecköffnungsrand 26 bzw. der Außenwulst 28 des Endabschnitts 18 eingeschnürt bzw. umgebördelt ist.

## Patentansprüche

1. Adaptierbare Anschlußvorrichtung für ein Rohr, insbesondere Rohrverbindungsvorrichtung für vorzugsweise Kunststoff-Metall-Verbundrohre, mit
einem Anschlußkörper (12),
- mindestens einem mit dem Anschlußkörper (12) verbindbaren Adapter-Zwischenstück (30), mit dem das Rohr (52) verbindbar ist,
**dadurch gekennzeichnet,**
- daß das Zwischenstück (30) einen Stützabschnitt (34) aufweist, auf den das Rohr (52) aufsteckbar ist und durch einen dieses umgebenden Preßkörper (54) auf den Stützabschnitt (34) aufpreßbar ist,
- daß der Anschlußkörper (12) mindestens einen über eine Einstecköffnung (22) zugänglichen Einsteckraum (14) aufweist, in den ein Einsteckende (32) des Zwischenstücks (30) einsteckbar ist, wobei der Anschlußkörper (12) das Einsteckende (32) des Zwischenstücks (30) umschließt, und
- daß das Einsteckende (32) des Zwischenstücks (30) eine Umfangsvertiefung (44) aufweist, in die das Material des die Umfangsvertiefung (44) umgebenden Abschnitts des Anschlußkörpers (12) unter plastischer Verformung hineinpreßbar ist.

2. Vorrichtung nach Anspruch 1, dadurch gekennzeichnet, daß die Umfangsvertiefung (44) in Höhe der Einstecköffnung (22) und des sich an diese unmittelbar anschließenden Abschnitts des Anschlußkörpers (12) angeordnet ist und daß der Anschlußkörper (12) in dem Randbereich (26) seiner Einstecköffnung (22) in die Umfangsvertiefung (44) hinein umbördelbar ist.

3. Vorrichtung nach Anspruch 1 oder 2, dadurch gekennzeichnet, daß der in die Umfangsvertiefung (44) des Zwischenstücks (30) hineinpreßbare Abschnitt des Anschlußkörpers (12) verdickt ist.

4. Vorrichtung nach Anspruch 2 und 3, dadurch gekennzeichnet, daß der Anschlußkörper (12) einen nach außen überstehenden und die Einstecköffnung (22) begrenzenden Ringwulst (28) aufweist.

5. Vorrichtung nach einem der Ansprüche 1 bis 4, dadurch gekennzeichnet, daß die Umfangsvertiefung (44) an ihrer in Einsteckrichtung des Zwischenstücks (30) vorderen Begrenzungsflanke eine in die Außenflache (50) des Einsteckendes (32) übergehende Schrägfläche (46), vorzugsweise eine gekrümmte Anlagefläche für das eingepreßte Material des Anschlußkörpers (12) aufweist und daß der Einsteckraum (14) an seinem der Einstecköffnung (22) gegenüberliegenden Ende eine Schulter (20) aufweist, an die sich das Einsteckende (32) des Zwischenstücks (30) anlegt.

6. Vorrichtung nach einem der Ansprüche 1 bis 5, dadurch gekennzeichnet, daß das Einsteckende (32) des Zwischenstücks (30) mit einem Dichtungsring (40) zum dichtenden Anliegen an dem Anschlußkörper (12) versehen ist.

## Claims

1. An adaptive connecting device for a tube, particularly a tube connecting device for preferably plastic-metal composite tubes, comprising
- a connecting body (12),
- at least one adapting intermediate piece (30) connectable to the connecting body (12), to which adapting intermediate piece the tube (52) is connectable,
**characterized in**
- that the intermediate piece (30) comprises a supporting section (34) adapted for plugging thereon the tube (52) which is capable of being pressed onto the supporting section (34) by means of a pressing body (54) surrounding the tube,
- that the connecting body (12) comprises at least one plug space (14) which is accessible via a plug opening (22) and adapted for plugging thereinto a plug-in end (32) of the intermediate piece (30), the connecting body (12) enclosing the plug-in end (32) of the intermediate piece (30), and
- that the plug-in end (32) of the intermediate piece (30) comprises a circumferential recess (44) adapted for pressing thereinto, by being plastically deformed, the material of the section of the connecting body (12) surrounding the circumferential recess (44).

2. The device according to claim 1, characterized in that the circumferential recess (44) is arranged level with the plug opening (22) and the directly adjoining section of the connecting body (12), and that the connecting body (12) is capable of being flanged into the circumferential recess (44) in the edge region (26) of its plug opening (22).

3. The device according to claim 1 or 2, characterized in that the section of the connecting body capable of being pressed into the circumferential recess (44) of the intermediate piece (30) is enlarged.

4. The device according to claim 2 and 3, characterized in that the connecting body (12) comprises an annular bead (28) projecting externally and defining the plug opening (22).

5. The device according to one of claims 1 to 4, characterized in that the circumferential recess (44) comprises an inclined surface (46), preferably a curved abutment surface for the pressed-in material of the connecting body (12), passing into the outer surface (50) of the plug-in end (32) at the front limiting flank - seen in the direction of plugging the intermediate piece (30) - , and that the plug space (14) comprises a shoulder (20) at its end opposite the plug opening (22), onto which shoulder the plug-in end (32) of the intermediate piece (30) abuts.

6. The device according to one of claims 1 to 5, characterized in that the plug-in end (32) of the intermediate piece (30) is provided with a sealing ring (40) for sealingly abutting on the connecting body (12).

## Revendications

1. Dispositif de raccordement adaptable pour tuyau, en particulier dispositif de liaison de tuyaux pour, de préférence, des tuyaux composites plastique-métal, avec
- un corps de raccordement (12),
- au moins une pièce intermédiaire d'adaptation (30) susceptible d'être assemblée avec le corps de raccordement (12), pièce grâce à laquelle peut être assemblé le tuyau,
caractérisé par le fait
- que la pièce intermédiaire (30) présente un tronçon d'appui (34) sur lequel peut être enfilé le tuyau (52), ledit tuyau pouvant être fixé par pression sur le tronçon d'appui (34), par l'intermédiaire d'un élément de pression (54), qui l'entoure,
- que le corps de raccordement (12) présente au moins un espace d'engagement (14), accessible par une ouverture d'engagement (22), dans lequel peut être introduite une extrémité d'engagement (32) de la pièce intermédiaire (30), le corps de raccordement (12) entourant l'extrémité d'engagement (32) de la pièce intermédiaire (30), et
- que l'extrémité d'engagement (32) de la pièce intermédiaire (30) présente un évidement périphérique (44) dans lequel peut être pressé, sous déformation plastique, le matériau de la zone du corps de raccordement (12), qui entoure l'évidement périphérique (44).

2. Dispositif selon la revendication 1, caractérisé par le fait que l'évidement périphérique (44) est disposé au niveau de l'ouverture d'engagement (22) et de la zone du corps de raccordement (12) immédiatement adjacente à cette dernière et que le corps de raccordement (12) petit, dans la zone de bordure (26) de son ouverture d'engagement (22), être serti dans l'évidement périphérique (44).

3. Dispositif selon la revendication 1 ou 2, caractérisé par le fait que la zone du corps de raccordement (12) pouvant être pressée dans l'évidement périphérique (44) de la pièce intermédiaire (30) est épaissie.

4. Dispositif selon les revendications 2 et 3, caractérisé par le fait que le corps de raccordement (12) présente un bourrelet annulaire (28) en saillie vers l'extérieur, ledit bourrelet délimitant l'ouverture d'engagement (22).

5. Dispositif selon l'une des revendications 1 à 4, caractérisé par le fait que l'évidement périphérique (44) présente, sur son flanc de délimitation avant dans la direction d'engagement de la pièce intermédiaire (30), une face oblique (46) qui se raccorde à la paroi externe (50) de l'extrémité d'engagement (32), de préférence une face d'appui courbe pour le matériau du corps de raccordement (12) introduit par pression et que l'espace d'engagement (14) présente, à son extrémité opposée à l'ouverture d'engagement (22), un épaulement (20) sur lequel vient s'appuyer l'extrémité d'engagement (32) de la pièce intermédiaire (30).

6. Dispositif selon l'une des revendications 1 à 5, caractérisé par le fait que l'extrémité d'engagement (32) de la pièce intermédiaire (30) est pourvue d'une bague d'étanchéité (40) pour coopérer de manière étanche avec le corps de raccordement (12).
